# EUROPEAN PATENT SPECIFICATION

(11) **EP 3 321 018 B1**
(45) Date of publication and mention of the grant of the patent: **07.10.2020**
(21) Application number: 16198018.0
(22) Date of filing: 09.11.2016
(51) Int. Cl.: B23C 5/08, B23C 5/28

(54) **A DISC MILLING CUTTER AND A KIT COMPRISING SUCH A DISC MILLING CUTTER**
SCHEIBENFRÄSER UND KIT MIT SOLCH EINEM SCHEIBENFRÄSER
FRAISE À DISQUE ET KIT COMPRENANT UNE TELLE FRAISE À DISQUE

(43) Date of publication of application: 16.05.2018
(73) Proprietor: Sandvik Intellectual Property AB, 811 81 Sandviken (SE)
(72) Inventor: LEHTO, Ralf, SE-803 11 GÄVLE (SE)
(74) Representative: Sandvik

(56) References cited:
- EP-A1- 2 662 173
- EP-A1- 2 929 967
- DE-A1- 3 104 752
- DE-A1- 10 145 006
- JP-A- H02 284 817
- JP-U- S4 997 882

## Description

### TECHNICAL FIELD OF THE INVENTION

The present invention relates to a disc milling cutter according to the preamble of appended claim 1 and a kit comprising such a disc milling cutter.

The invention relates to disc milling cutters of different designs, such as disc milling cutters designed purely for slot milling or disc milling cutters also designed for side and face milling. The invention is however particularly useful in so called gang milling having a plurality of disc milling cutters mounted to the same shaft.

When milling a metal work piece by means of a rotating disc milling cutter, it is often advantageous or even necessary to flush the work piece and/or the disc milling cutter with a coolant/flushing fluid in the form of a gas or a liquid or a mixture of gas and liquid. Hence, such cooling/flushing can be performed for different reasons, e.g. for cooling and/or lubricating purpose or for flushing away/evacuating chips from the work piece during machining. Accordingly, the present invention is directed to the problems of cooling the disc milling cutter and flushing away the chips from the work piece during machining with the disc milling cutter.

### BACKGROUND ART

A known way to achieve a cooling/flushing of a disc milling cutter is to simply direct a stream of liquid and/or gas from the outside towards the disc milling cutter and the work piece at a distance from where the actual machining takes place. However, such external cooling/flushing is inefficient. In particular, flushing with a coolant/flushing fluid for purpose of flushing away/chips by means of one or more external coolant/flushing fluid jets directed towards the disc milling cutter and the work piece from the outside will be very ineffective as most of the coolant/flushing fluid will not reach the machining area (inside a machined slot/groove) where it could be used for flushing away/evacuating the chips. In case of a liquid coolant this inefficient cooling/flushing will also result in a formation of a large amount of waste liquid, which has to be collected and filtered or disposed of.

EP 2 929 967 A1 discloses a disc milling cutter to be used for milling relatively deep and narrow slots. This known disc milling cutter is provided with internal coolant/flushing fluid channels extending radially within the disc milling cutter from a radially inner (inlet) opening located in an inner central portion of the disc milling cutter to an outlet opening in the outer peripheral portion of the disc milling cutter. The internal coolant/flushing fluid channels are supplied with coolant/flushing fluid through a tool holder shaft opening on an end surface on which the disc milling cutter is bearing. Although this known disc milling cutter provides efficient cooling/flushing, while avoiding the above disadvantages of external cooling/flushing, it exhibits some restrictions. One such restriction is that the use thereof requires a tool holder specifically designed for this disc milling cutter. Accordingly, a standard tool holder shaft having a central coolant/flushing fluid outlet opening may not be used for such a disc milling cutter. Furthermore, such a known disc milling cutter can only be used for metal cutting machining while rotating in one predetermined direction. Another restriction is that more than one such disc milling cutter may not be connected to the same tool holder for enabling so called gang milling.

### SUMMARY OF THE INVENTION

The object of the present invention is to provide a disc milling cutter according to the preamble of appended claim land a kit comprising such a disc milling cutter being improved in view of the restrictions mentioned above.

This object is with respect to the disc milling cutter according to the invention obtained by providing the disc milling cutter with the characterizing feature of claim 1.

By the at least one axially directed inlet opening in the disc milling cutter being formed by an axial through-hole extending through the disc milling cutter from a first axially directed side abutment surface to a second axially directed side abutment surface on the opposite side of the inner central portion of a disc milling cutter, the disc milling cutter can both receive and further communicate coolant/flushing fluid axially on the outside of a standard tool holder shaft having a central coolant/flushing fluid channel with a central outlet at an end of the shaft (which is communicating coolant/flushing fluid via a locking means mounted to the end of the standard shaft and further described below in connection with the kit). The disc milling cutter allows the mounting of not just one but several disc milling cutters (gang milling) in any desired axial position/configuration along the standard tool holder shaft (by mounting spacer ring(s) further described below in connection with the kit). The disc milling cutter may also be used for carrying out metal cutting milling of a work piece by rotation of the shaft of the tool holder in one direction and then the rotation direction for such milling may be changed by simply removing the disc milling cutter from the shaft and mounting it oppositely turned to the shaft. Thus, the flexibility of the use of such a disc milling cutter is increased with respect to the known disc milling cutter of the type described in the introduction. The "coolant channel" in accordance with the invention should hereby be interpreted to serve the purpose of cooling the cutting edges/inserts of the disc milling cutter and/or flushing away/evacuating the chips from the workpiece during milling.

According to an embodiment of the invention the disc milling cutter has at least one internal coolant distribution channel extending at least partially around the central through-hole and connecting the at least one axially directed inlet opening with at least two radially extending coolant channels. An advantageous flow distribution can thereby be achieved between several radially extending coolant channels having their inlet openings connected to the same coolant distribution channel.

According to another embodiment of the invention the disc milling cutter has a plurality of axial through-holes forming the axially directed inlet openings, which is favourable for obtaining an efficient cooling/flushing at different peripheral portions around the circumference of the disc milling cutter, wherein the cooling/flushing efficiency may in particular be further increased when the axial through-holes forming the axially directed inlet openings are evenly distributed around the central through-hole as in another embodiment of the invention.

According to another embodiment of the invention all axial through-holes forming the axially directed inlet openings open into said at least one internal coolant distribution channel. In this way the coolant can be distributed from one inlet to several radially extending coolant channels.

According to another embodiment of the invention the internal coolant distribution channel is an annular channel surrounding the central through-hole and connecting all axially directed inlet openings with radially extending coolant channels of the disc milling cutter. This constitutes a simple and efficient design for obtaining a uniform cooling/flushing of the disc milling cutter, while avoiding a risk of failing to provide any radially extending coolant channel with coolant/flushing fluid as a consequence of coolant/flushing fluid failing to reach any of the axial through-holes of the disc milling cutter.

According to another embodiment of the invention the at least one outlet opening of the at least one internal coolant channel is located in a chip pocket formed in the peripheral portion of the disc milling cutter. Chips formed by metal cutting machining of the disc milling cutter are in this way efficiently removed/evacuated from the chip pocket and the workpiece (in particular when milling slots/grooves in the workpiece).

The object of the present invention is also obtained by providing a kit according to the claim directed to the kit.

By combining at least one disc milling cutter according to the present invention with at least one spacer ring with a central through-hole for mounting the spacer ring onto the same shaft of the rotatable tool holder as the disc milling cutter, in which the spacer ring has means configured to provide a rotary preventing attachment of the spacer ring in a predetermined angular position in relation to the shaft of the tool holder and the spacer ring comprises at least one axial through-hole located to communicate with the at least one axially directed inlet opening in the disc milling cutter when the spacer ring is abutting the first or second axially directed side abutment surface of the disc milling cutter in the predetermined angular position, it will be possible to conduct coolant/flushing fluid through the spacer ring to the disc milling cutter and by that use the at least one spacer ring to mount the disc milling cutter at different axial locations along the extension of the tool holder shaft and still obtain the efficient and flexible internal cooling/flushing described above. It also allows for several disc milling cutters with one or several spacer rings to be mounted on the shaft in a desired gang milling configuration.

According to an embodiment of the kit this comprises a plurality of disc milling cutters, and at least one disc milling cutter has said means configured to provide a rotary preventing attachment of the disc milling cutter to obtain this in an angular position with respect to the shaft differing from such an angular position of another disc milling cutter in the sense that the cutting edges of at least one disc milling cutter or of the cutting inserts thereof are circumferentially displaced with respect to the cutting edges of another disc milling cutter or of the cutting inserts thereof when attached to the shaft. This feature offers an option to arrange a disc milling cutter of the kit with respect to another disc milling cutter with the cutting edges circumferentially displaced and still provide efficient cooling/flushing of the disc milling cutter through alignment of the axial through-holes thereof with the axial through-holes of a spacer ring. This enables an arrangement of a plurality of disc milling cutters on the same tool holder shaft for gang milling so that the cutting edges associated with some disc milling cutters will not hit the work piece at the same time as cutting edges associated with other disc milling cutters to reduce/eliminate the tendency for vibrations to arise as well as to keep the noise down, while obtaining efficient cooling/flushing in all the disc milling cutters.

This same result may also be obtained by providing a kit for which the number of axial through-holes in at least one disc milling cutter is a multiple of the number of the axial through-holes of the spacer ring so that at most half of the axial through-holes of the disc milling cutter are located to communicate with an axial through-hole of a spacer ring in the predetermined angular position. This means that a disc milling cutter may be turned with respect to an adjacent spacer ring for obtaining alignment with the axial through-holes of the spacer ring with other axial through-holes of the disc milling cutter than before. A condition for enabling such turning is of course that the means for rotary preventing attachment of the disc milling cutters are correspondingly adapted with respect to the circumferential position thereof on the disc milling cutter.

According to another embodiment of the kit the axial through-holes in the spacer ring are evenly distributed around the central through-hole.

According to another embodiment of the invention the kit further comprises locking means for securing the at least one disc milling cutter and the at least one spacer ring on the shaft of the rotatable tool holder, the locking means comprising a lid being mountable to an end of the shaft by an attachment member clamping the lid onto the spacer ring or the first or second axially directed side abutment surface of the disc milling cutter in the securing state of the locking means, wherein the lid comprises a coolant connection for communicating coolant between a central coolant channel mouthing at the end of the shaft and the axial through-hole(s) in the spacer ring or the disc milling cutter in contact with the lid. The provision of the kit with such a locking means enables the use of a standard tool holder for the use of the at least one disc milling cutter of the kit for metal cutting machining while obtaining efficient cooling/flushing thereof. The position of the disc milling cutter along the tool holder shaft may also be modified by choosing to have a disc milling cutter arranged next to said lid or one or more spacer rings separating the disc milling cutter from said lid.

According to an embodiment of the kit the attachment member is a clamping screw having an external threaded shank for threading into an internal thread of the central coolant channel in the end of the shaft, the shank of the clamping screw comprising at least one feed channel of the locking means for coolant communication between the central coolant channel of the shaft and the coolant connection of the lid. Thus, such a milling tool may use a standard tool holder for obtaining efficient cooling of the at least one disc milling cutter of the milling tool making such a milling tool very attractive from the cost point of view.

According to another embodiment of the kit it further comprises the tool holder having the central coolant channel configured to be connected to a source of coolant at a rear end of the tool holder.

According to another embodiment of the kit the tool holder has a collar with an axially directed mounting surface for abutting the spacer ring or the axially directed side surface of the disc milling cutter mounted on the shaft, wherein the tool holder is provided with at least one further coolant channel connected to the central coolant channel and ending in a feed opening in the mounting surface of the collar, which feed opening is positioned to provide coolant to the at least one axially directed inlet opening in the axially directed side abutment surface of the disc milling cutter or the axial through-hole of the spacer ring. Besides the possibility to arrange one or more disc milling cutters according to the invention in different positions along the tool holder shaft this embodiment of the invention results in a possibility to increase the coolant flow in the internal coolant channels of the disc milling cutter by feeding coolant to the axial through-holes thereof from both sides of the disc milling cutter.

Other advantageous features as well as advantages of the present invention appear from the description following below.

### BRIEF DESCRIPTION OF THE DRAWINGS

With reference to the appended drawings, below follows a specific description of embodiments of the invention cited as examples.

In the drawings:
- Fig. 1: is an exploded perspective view of a kit according to a first embodiment of the invention,
- Fig. 2: is a schematic cross section view of the kit shown in Fig. 1 in an operative state,
- Fig. 3: is an exploded and partially sectioned perspective view of the disc milling cutter shown in Fig. 1 and a spacer ring arranged next thereto,
- Fig. 4: is a view similar to Fig. 2 of a kit according to a second embodiment of the invention in an operative state,
- Fig. 5: is a view of a disc milling cutter of a kit of an embodiment of the invention, and
- Fig. 6: is a view similar to Fig. 2 of a kit according to a third embodiment of the invention in an operative state.

### DETAILED DESCRIPTION OF EMBODIMENTS OF THE INVENTION

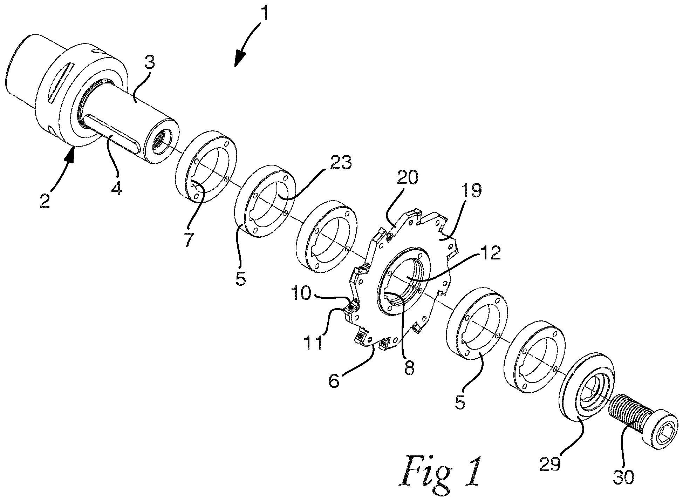

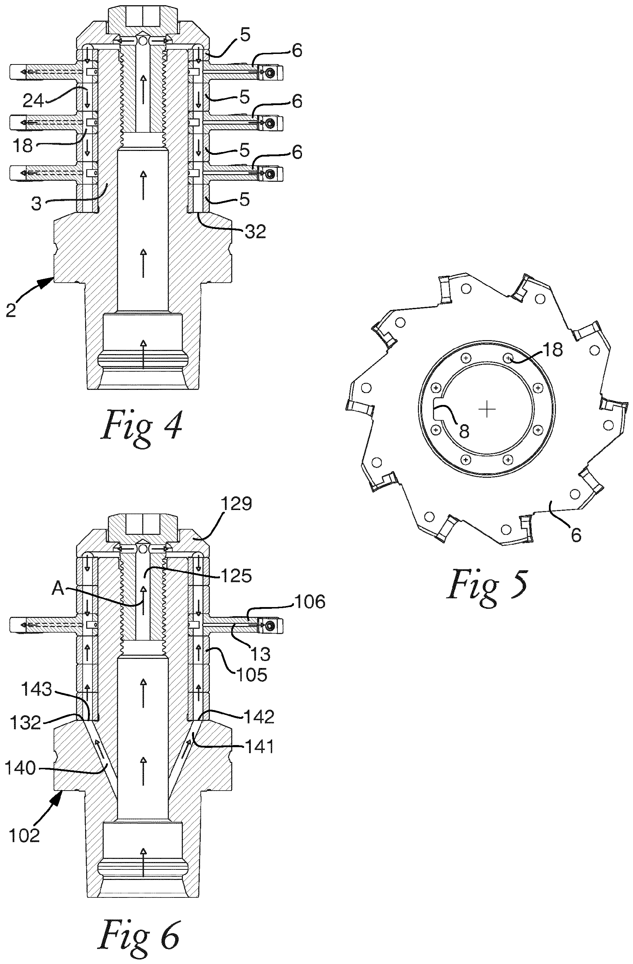

A milling tool 1 according to a first embodiment of the invention suitable for slot milling as well as face milling and shoulder milling and also for so called gang milling, which will be explained further below when making reference to Fig. 4, will now be described while making reference simultaneously to Figs. 1-3. The milling tool has a rotatable tool holder 2 to be rotary preventing attached to a milling machine and having a shaft 3 with a member 4 for rotary preventing attachment of at least one spacer ring 5 and at least one disc milling cutter 6 according to the present invention by corresponding cut outs 7, 8 therein. The thickness of a disc milling cutter may be any but may typically vary from 2 mm to 26 mm and mostly from 6 mm to 26 mm resulting in corresponding slot widths when used for slot milling. The diameter of the disc milling cutter is for example 60 mm-320 mm.

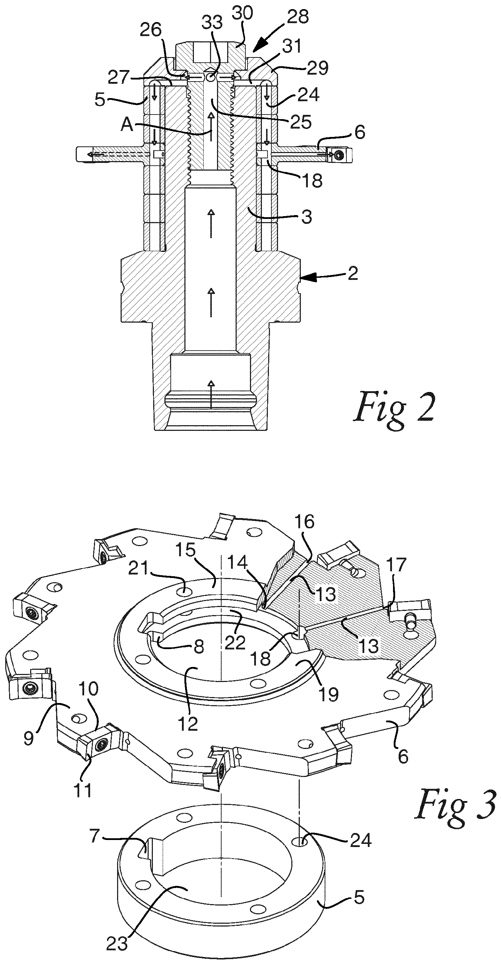

The design of a disc milling cutter 6 according to a first embodiment of the invention mainly appears from Fig. 3, and the disc milling cutter has an outer peripheral portion 9 provided with a number of seats 10 for cutting inserts 11. The disc milling cutter has a central through-hole 12 for mounting the disc milling cutter onto the shaft 3 of the tool holder 2. The disc milling cutter has further internal coolant channels 13 extending radially within the disc milling cutter from a radially inner opening 14 located in an inner central portion 15 of the disc milling cutter to an outlet opening 16 in the outer peripheral portion 9 located in a chip pocket 17 of the disc milling cutter. The number of such internal coolant channels are in this embodiment the same as the number of seats for cutting inserts.

The inner central portion 15 of the disc milling cutter is provided with four axial through-holes 18 extending through the disc milling cutter from a first axially directed side abutment surface 19 to a second axially directed side abutment surface 20 (hidden in Fig. 1) on the opposite side of the inner central portion of the disc milling cutter. These axial through-holes are forming axially directed inlet openings 21 communicating through an annular internal coolant distribution channel 22 with the inlet openings 14 of the internal coolant channels 13.

The spacer rings 5 have also a central through-hole 23 for mounting the respective spacer ring onto the same tool holder shaft 3 as the disc milling cutter 6. Each spacer ring 5 further comprises four axial through-holes 24 located to communicate with an axially directed inlet opening 21 each in the disc milling cutter or an axial through-hole 24 in another spacer ring each when the spacer ring is abutting the first or second axially directed side abutment surface 19, 20 of a disc milling cutter or another spacer ring when the spacer ring(-s) and disc milling cutter(-s) are rotary preventing attached in a predetermined angular position in relation to a shaft 3 of the tool holder 2.

The tool holder 2 has a central coolant channel 25 configured to be connected to a source of coolant and extending in the shaft 3 to an opening 26 in an end surface 27 of the shaft. The tool further comprises a locking means 28 for securing one or more disc milling cutters and spacer rings on the shaft 3. This locking means comprises a lid 29 mountable to an end of the shaft by an attachment member 30 in the form of a clamping screw having an external shank for threading into an internal thread of the central coolant channel 25 in the end of the shaft so as to be tightened for clamping the lid 29 onto a spacer ring as shown in Fig. 2 or onto the first or second axially directed side abutment surface of a disc milling cutter in a securing state of the locking means. The shank of the clamping screw 30 comprises at least one feed opening 33 of the locking means for coolant communication between the central coolant channel 25 and a coolant connection 31 formed by the lid 29 to the axial through-holes 24, 18 in a spacer ring or disc milling cutter in contact with the lid 29 as appears from Fig. 2.

It is shown through arrows A in Fig. 2 how coolant will reach the internal coolant channels 13 of the disc milling cutter 6 through a central coolant channel 25 of the tool holder 2, the feed opening 33 of the screw shank the coolant connection 31 of the lid, the axial through-holes 24 of the spacer rings 5 and the axial through-holes 18 of a disc milling cutter and the internal coolant distribution channel 22 thereof. This means that the disc milling cutter 6 may be arranged in different positions along the shaft 3 and still efficient feeding of coolant to the disc milling cutter will be ensured by the use of a standard tool holder as shown in Fig. 1 and 2. The spacer rings 5a arranged closer to the collar 32 of the tool holder with an enlarged cross section with respect to the shaft 3 have not to be spacer rings according to the invention provided with axial through-holes, although it may be suitable to have spacer rings of only one type in the kit used in the milling tool according to the invention.

Fig. 4 illustrates the flexibility of the milling tool according to this embodiment of the invention and how several disc milling cutters 6 may be mounted on the tool holder shaft 3 for carrying out gang milling, and it is obvious that the number of the disc milling cutters and the mutual positions thereof may be altered by different arrangements of spacer rings, and it is of course also possible to have spacer rings of the type shown in Fig. 1 with different thicknesses for varying positions and mutual distances of the disc milling cutters.

Fig. 5 indicates the possibility to provide one or several disc milling cutters 6 with a number of axial through-holes 18 being a multiple of the number of the axial through-holes 24 of the spacer rings 5, which in this case means that half of the eight through-holes of the disc milling cutter are located to communicate with an axial through-hole of a spacer ring in said predetermined angular position. This means that the disc milling cutter shown in Fig. 5 may be rotated by 45° with respect to a spacer ring according to Fig. 3 between two positions of alignment of the axial through-holes in the disc milling cutter with axial through-holes on the spacer ring, so that in case of a plurality of disc milling cutters mounted on the tool holder shaft these may be arranged to have the cutting inserts thereof attacking a work piece at instants separated in time provided that the disc milling cutters have the cut outs 8 correspondingly positioned and still all disc milling cutters will be efficiently provided with coolant. The same result may be obtained by having just as many axial through-holes 18 in all disc milling cutters 6 as in the spacer rings and having the axial through-holes 18 in some disc milling cutters in another relative circumferential position to the cutting edges than the other disc milling cutters.

Fig. 6 illustrates a kit according to a third embodiment of the invention in an operative state differing from the kit shown in Fig. 2 by the design of the tool holder 102. The tool holder is provided with additional coolant channels 140, 141 emerging from the central coolant channel 125 and ending in a respective feed opening 142, 143 in the mounting surface of the collar 132. Each feed opening is positioned to provide feeding of coolant from the coolant channel thereof to one axially directed inlet opening in an axially directed side abutment surface of the disc milling cutter 106 through an axial through-hole of the spacer rings 105 mounted on the tool holder shaft 103 between the collar 132 and the disc milling cutter 106. The number of such additional channels 140, 141 inside the tool holder is preferably, but not necessarily, at least as high as the number of the axial through-holes in the disc milling cutter. In the embodiment shown in Fig. 6 it is possible to provide for feeding of coolant to the disc milling cutter only through the channels mouthing in the collar 132 or to have the central coolant channel 125 be open to the lid 129 for feeding coolant additionally along the same flow part as shown in Fig. 2 as indicated by the arrows A. In the latter case the pressure of the coolant reaching the internal coolant channels 13 of the disc milling cutter will be increased by supplying coolant thereto through the axial through-holes from both axially directed side abutment surfaces of the disc milling cutter.

The invention is of course not restricted to the embodiments thereof described above, but many possibilities to modifications thereof would be apparent to a person with skill in the art without departing from the scope of the invention as defined in the appended claims.

"Radially" with respect to the extension of the internal coolant channels inside the disc milling cutter is to be interpreted as an extension from a central portion of the disc milling cutter towards a peripheral portion thereof and this extension has not necessarily to be exactly radial, i.e. intersecting a center axis of the disc milling cutter. The same reasoning applies to the use of "axial" for for instance the axial through-holes in the disc milling cutters and the spacer rings, which is to be interpreted as these have an extension with a main component in the axial direction.

It is obvious that the axial through-holes of the disc milling cutter may open directly into an internal coolant channel thereof without any internal distribution channel, or the annular internal distribution channel may be replaced by a plurality of internal distribution channels each extending partially around the central through-hole of the disc milling cutter and connecting at least one axially directed inlet opening of an axial through-hole with at least two radially extending coolant channels.

The disc milling cutter may be provided with cutting edges on the very disc. The internal coolant channels of the disc milling cutter may have an outlet in the peripheral portion of the disc on an axially directed side abutment surface.

The spacer rings have of course not to have a circular outer contour line.

This is to mention only some of said possible modifications within the scope of the invention.

## Claims

1. A disc milling cutter for metal cutting machining comprising:
• an outer peripheral portion (9) provided with a number of cutting edges or a number of seats (10) for cutting inserts (11),
• a central through-hole (12) for mounting the disc milling cutter (6) onto a shaft (3, 103) of a rotatable tool holder (2, 102),
• means (8) configured to provide a rotary preventing attachment of the disc milling cutter (6) in a specific angular position in relation to the shaft penetrating the central through-hole (12),
• at least one internal coolant channel (13) extending radially within the disc milling cutter (6) from a radially inner opening (14) located in an inner central portion (15) of the disc milling cutter to at least one outlet opening (16) in the outer peripheral portion (9), and
• at least one axially directed inlet opening (21) in a first axially directed side abutment surface (19) of the inner central portion (15) of the disc milling cutter for receiving the coolant and communicating with the radially inner opening (14) of the internal radially extending coolant channel (13),
***characterized* in that** the at least one axially directed inlet opening (21) is formed by an axial through-hole (18) extending through the disc milling cutter (6) from the first axially directed side abutment surface (19) to a second axially directed side abutment surface (20) on the opposite side of the inner central portion (15) of the disc milling cutter.

2. A disc milling cutter according to claim 1, ***characterized* in that** it has at least one internal coolant distribution channel (22) extending at least partially around the central through-hole (12) and connecting the at least one axially directed inlet opening (21) with at least two radially extending coolant channels (13).

3. A disc milling cutter according to claim 1 or 2, ***characterized* in that** it has a plurality of axial through-holes (18) forming the axially directed inlet openings (21).

4. A disc milling cutter according to claim 3, ***characterized* in that** the axial through-holes (18) forming the axially directed inlet openings (21) are evenly distributed around the central through-hole (12).

5. A disc milling cutter according to claims 2 and 3, ***characterized* in that** all axial through-holes (18) forming axially directed inlet openings (21) open into said at least one internal coolant distribution channel (22).

6. A disc milling cutter according to claim 2, ***characterized* in that** the internal coolant distribution channel (22) is an annular channel surrounding the central through-hole (12) and connecting all axially directed inlet openings (21) with the radially extending coolant channels (13) of the disc milling cutter.

7. A disc milling cutter according to any of the preceding claims, ***characterized* in that** the at least one outlet opening (16) of the at least one internal coolant channel (13) is located in a chip pocket (17) formed in the peripheral portion (9) of the disc milling cutter.

8. A kit comprising
a) at least one disc milling cutter (6) for metal cutting according to any of the preceding claims and
b) at least one spacer ring (5) with a central through-hole (23) for mounting the spacer ring onto the same shaft (3, 103) of the rotatable tool holder (2, 102) as the disc milling cutter, the spacer ring having means (7) configured to provide a rotary preventing attachment of the spacer ring in a predetermined angular position in relation to the shaft (3, 103) of the tool holder, wherein the spacer ring comprises at least one axial through-hole (24) located to communicate with the at least one axially directed inlet opening (21) in the disc milling cutter (6) when the spacer ring (5) is abutting the first (19) or second (20) axially directed side abutment surface of the disc milling cutter in the predetermined angular position.

9. A kit according to claim 8, ***characterized* in that** it comprises a plurality of disc milling cutters (6), and that at least one disc milling cutter (6) has said means (8) configured to provide a rotary preventing attachment of the disc milling cutter (6) to obtain this in an angular position with respect to the shaft (3) differing from such an angular position of another disc milling cutter in the sense that the cutting edges of at least one disc milling cutter or of the cutting inserts thereof are circumferentially displaced with respect to the cutting edges of another disc milling cutter or of the cutting inserts thereof when attached to the shaft.

10. A kit according to claim 8 or 9, ***characterized* in that** the number of axial through-holes (18) in at least one disc milling cutter (6) is a multiple of the number of the axial through-holes (24) of the spacer ring (5) so that at most half of the axial through-holes of the disc milling cutter are located to communicate with an axial through-hole (24) of a spacer ring (5) in the predetermined angular position.

11. A kit according to claim 10, having at least one disc milling cutter according to claim 4, ***characterized* in that** the axial through-holes (24) in the spacer ring (5) are evenly distributed around the central through-hole (23).

12. A kit according to any of claims 8-11, ***characterized* in that** it comprises a plurality of spacer rings (5) and/or a plurality of disc milling cutters (6).

13. A kit according to any of claims 8-12, ***characterized* in that** it further comprises locking means (28) for securing the at least one disc milling cutter (6) and the at least one spacer (5) ring on the shaft (3, 103) of the rotatable tool holder (2, 102), the locking means comprising a lid (29, 129) being mountable to an end of the shaft by an attachment member (30) clamping the lid onto the spacer ring or the first or second axially directed side abutment surface of the disc milling cutter in the securing state of the locking means, wherein the lid (29, 129) comprises a coolant connection (31) for communicating coolant between a central coolant channel (25, 125, 225) mouthing at the end of the shaft and the axial through-hole(s) (24, 18) in the spacer ring (5) or the disc milling cutter (6) in contact with the lid.

14. A kit according to claim 13, ***characterized* in that** the attachment member (30) is a clamping screw having an external threaded shank for threading into an internal thread of the central coolant channel in the end of the shaft, the shank of the clamping screw comprising at least one feed channel (33) of the locking means for coolant communication between the central coolant channel (25, 125, 225, 140, 141, 240, 241) of the shaft and the coolant connection of the lid.

15. A kit according to claims 13 or 14, ***characterized* in that** it further comprises the tool holder (2, 102) having the central coolant channel (25, 125) configured to be connected to a source of coolant at a rear end of the tool holder.

16. A kit according to claim 15, ***characterized* in that** the tool holder (102) has a collar (132) with an axially directed mounting surface for abutting the spacer ring (5) or the axially directed side abutment surface of the disc milling cutter mounted on the shaft, wherein the tool holder is provided with at least one further coolant channel (140, 141) connected to the central coolant channel and ending in a feed opening (142, 143) in the mounting surface of the collar (132), which feed opening is positioned to provide coolant to the at least one axially directed inlet opening (21) in the axially directed side abutment surface (19, 20) of the disc milling cutter (6) or the axial through-hole (24) of the spacer ring (5).

## Patentansprüche

1. Scheibenfräser für die schneidende Bearbeitung von Metall, welche aufweist:
• Einen äußeren, umlaufenden Bereich (9), welcher mit einer Anzahl von Schneidkanten oder einer Anzahl von Sitzen (10) für Schneideinsätze (11) versehen ist,
• eine zentrale Durchgangsbohrung (12) zum Montieren des Scheibenfräsers (6) auf einer Welle (3, 103) eines drehbaren Werkzeughalters (2, 102),
• Einrichtungen (8), die so ausgestaltet sind, dass sie eine ein Drehen verhindernde Anbringung des Scheibenfräsers (6) in einer speziellen Winkelposition relativ zu dem Schaft, welcher durch die zentrale Durchgangsbohrung (12) hindurch verläuft, gewährleisten,
• zumindest einen inneren Kühlmittelkanal (13), der sich innerhalb des Scheibenfräsers (6) radial von einer radial inneren Öffnung (14), die an einem inneren zentralen Abschnitt (15) des Scheibenfräsers liegt, zu zumindest einer Auslassöffnung (16) in dem äußeren Umfangsabschnitt (9) erstreckt, und
• zumindest eine axial gerichtete Einlassöffnung (21) in einer ersten, axial gerichteten seitlichen Anlagefläche (19) des inneren zentralen Abschnittes (15) des Scheibenfräsers für die Aufnahme des Kühlmittels und für eine kommunizierende Verbindung mit der radial inneren Öffnung (14) des inneren, sich radial erstreckenden Kühlmittelkanals (13),
**dadurch gekennzeichnet, dass** die zumindest eine axial gerichtete Einlassöffnung (21) durch eine axiale Durchgangsbohrung (18) gebildet wird, welche sich von der ersten, axial gerichteten seitlichen Anlagefläche (19) zu einer zweiten axial gerichteten seitlichen Anlagefläche (20) auf der gegenüberliegenden Seite des inneren zentralen Bereiches (15) des Scheibenfräsers gebildet ist.

2. Scheibenfräser nach Anspruch 1, **dadurch gekennzeichnet, dass** er zumindest einen innenliegenden Kühlmittelverteilungskanal (22) hat, der sich zumindest teilweise um die zentrale Durchgangsbohrung (12) herum erstreckt und die zumindest eine axial gerichtete Einlassöffnung (21) mit zumindest zwei sich radial erstreckenden Kühlmittelkanälen (13) verbindet.

3. Scheibenfräser nach Anspruch 1 oder 2, **dadurch gekennzeichnet, dass** er eine Mehrzahl von axialen Durchgangsbohrungen (18) hat, welche die axial gerichteten Einlassöffnungen (21) bilden.

4. Scheibenfräser nach Anspruch 3, **dadurch gekennzeichnet, dass** die axialen Durchgangsbohrungen (18), welche die axial gerichteten Einlassöffnungen (21) bilden, gleichmäßig um die zentrale Durchgangsbohrung (12) herum verteilt sind.

5. Scheibenfräser nach Anspruch 2 und 3, **dadurch gekennzeichnet, dass** alle axialen Durchgangsbohrungen (18), welche axial gerichtete Einlassöffnungen (21) bilden, sich zu dem zumindest einen innenliegenden Kühlmittelverteilungskanal (22) hin öffnen.

6. Scheibenfräser nach Anspruch 2, **dadurch gekennzeichnet, dass** der innenliegende Kühlmittelverteilungskanal (22) ein ringförmiger Kanal ist, welcher die zentrale Durchgangsbohrung (12) umgibt und alle axial gerichteten Einlassöffnungen (21) mit den sich radial erstreckenden Kühlmittelkanälen (13) des Scheibenfräsers verbindet.

7. Scheibenfräser nach einem der vorstehenden Ansprüche, **dadurch gekennzeichnet, dass** die zumindest eine Auslassöffnung (16) des zumindest einen innenliegenden Kühlmittelkanals (13) in einer Spantasche (17) liegt, die in dem Umfangsbereich (9) des Scheibenfräsers ausgebildet ist.

8. Bausatz, welcher aufweist:
a) zumindest einen Scheibenfräser (6) für das Schneiden von Metall nach einem der vorstehenden Ansprüche, und
b) zumindest einen Abstandsring (5) mit einer zentralen Durchgangsbohrung (23) für die Montage des Abstandsringes auf derselben Welle (3, 103) des drehbaren Werkzeughalters (2, 102) wie der Scheibenfräser, wobei der Abstandsring Einrichtungen (7) aufweist, die so ausgestaltet sind, dass sie eine ein Drehen verhindernde Anbringung des Abstandsringes in einer vorbestimmten Winkelposition relativ zu der Welle (3, 103) des Werkzeughalters gewährleisten, wobei der Abstandsring zumindest eine axiale Durchgangsbohrung (24) aufweist, die so angeordnet ist, dass sie in Kommunikationsverbindung mit der zumindest einen axial gerichteten Einlassöffnung (21) in dem Scheibenfräser (6) steht, wenn der Abstandsring (5) an der ersten (19) oder zweiten (20) axial gerichteten seitlichen Anlagefläche des Scheibenfräsers in der vorbestimmten Winkelposition anliegt.

9. Bausatz nach Anspruch 8, **dadurch gekennzeichnet, dass** er eine Mehrzahl von Scheibenfräsern (6) aufweist, und dass zumindest ein Scheibenfräser (6) die Einrichtung (8) hat, welche dafür ausgelegt ist, eine ein Drehen verhindernde Anbringung an der Frässcheibe (6) zu gewährleisten, um sie in einer Winkelposition bezüglich der Welle (3) zu halten, die von einer Winkelposition einer weiteren Frässcheibe in dem Sinne verschieden ist, dass die Schneidkanten des zumindest einen Scheibenfräsers oder die Schneid-einsätze desselben relativ zu den Schneidkanten eines weiteren Scheibenfräsers oder den Schneideinsätzen desselben in Umfangsrichtung versetzt sind, wenn sie an der Welle angebracht sind.

10. Bausatz nach Anspruch 8 oder 9, **dadurch gekennzeichnet, dass** die Anzahl axialer Durchgangsbohrungen (18) in dem zumindest einen Scheibenfräser (6) ein Vielfaches der Anzahl der axialen Durchgangsbohrungen (24) des Abstandsringes (5) beträgt, sodass zumindest die Hälfte der axialen Durchgangsbohrungen der Frässcheibe so angeordnet ist, dass sie in der vorbestimmten Winkelposition mit einer axialen Durchgangsbohrung (24) eines Abstandsringes (5) in kommunizierender Verbindung stehen.

11. Bausatz nach Anspruch 10, welcher zumindest eine Frässcheibe nach Anspruch 4 hat, **dadurch gekennzeichnet, dass** die axialen Durchgangsbohrungen (24) in dem Abstandsring (5) gleichmäßig um die zentrale Durchgangsbohrung (23) herum verteilt sind.

12. Bausatz nach einem der Ansprüche 8 bis 11, **dadurch gekennzeichnet, dass** er eine Mehrzahl von Abstandsringen (5) und/oder eine Mehrzahl von Scheibenfräsern (6) aufweist.

13. Bausatz nach einem der Ansprüche 8 bis 12, **dadurch gekennzeichnet, dass** er weiterhin Verriegelungseinrichtungen (28) zum Sichern des zumindest einen Scheibenfräsers (6) und des zumindest einen Abstandsringes (5) auf der Welle (3, 103) des drehbaren Werkzeughalters (2, 102) aufweist, wobei die Verriegelungseinrichtung einen Deckel (29, 129) aufweist, der an einem Ende der Welle mit Hilfe eines Befestigungselementes (30) montierbar ist, welches den Deckel auf dem Abstandsring oder der ersten oder zweiten axial gerichteten seitlichen Anlagefläche der Frässcheibe in dem Sicherungszustand der Verriegelungseinrichtung festspannt, wobei der Deckel (29, 129) einen Kühlmittelanschluss (31) aufweist, um eine kommunizierende Kühlmittelverbindung zu bilden zwischen einem zentralen Kühlmittelkanal (25, 125, 225), der an dem Ende der Welle mündet, und der (den) axialen Durchgangsbohrung(en) (24, 18) in dem Abstandsring (5) oder der Frässcheibe (6), die bzw. der in Kontakt mit dem Deckel steht.

14. Bausatz nach Anspruch 13, **dadurch gekennzeichnet, dass** das Befestigungselement (30) eine Spannschraube ist, die eine mit Außengewinde versehenen Schaft für das Einschrauben in ein Innengewinde des zentralen Kühlmittelkanals am Ende der Welle hat, wobei der Schaft der Spannschraube zumindest einen Zufuhrkanal (33) der Verriegelungseinrichtung für die Kühlmittelverbindung zwischen dem zentralen Kühlmittelkanal (25, 125, 225, 140, 141, 240, 241) der Welle und den Kühlmittelanschluss des Deckels aufweist.

15. Bausatz nach Anspruch 13 oder 14, **dadurch gekennzeichnet, dass** er weiterhin den Werkzeughalter (2, 102) aufweist, welcher den zentralen Kühlmittelkanal (25, 125) hat, welcher dafür ausgelegt ist, mit einer Kühlmittelquelle am hinteren Ende des Werkzeughalters verbunden zu werden.

16. Bausatz nach Anspruch 15, **dadurch gekennzeichnet, dass** der Werkzeughalter (102) einen Kragen (132) mit einer axial gerichteten Befestigungsfläche für das Anlegen des Abstandsringes (5) oder der axial gerichteten seitlichen Anlagefläche der Frässcheibe hat, welcher auf der Welle montiert ist, wobei der Werkzeughalter mit zumindest einem weiteren Kühlmittelkanal (140, 141) versehen ist, der mit dem zentralen Kühlmittelkanal verbunden ist und in einer Zufuhröffnung (142, 143) in der Befestigungsfläche des Kragens (132) verbunden ist, wobei die Zufuhröffnung so angeordnet ist, dass sie Kühlmittel für die zumindest eine axial ausgerichtete Einlassöffnung (21) in der axial gerichteten seitlichen Anlagefläche (19, 20) der Frässcheibe oder der axialen Durchgangsbohrung (24) des Abstandsringes (5) bereitstellt.

## Revendications

1. Fraise-disque destinée à l'usinage par découpe de métal comprenant :
• une partie périphérique extérieure (9) dotée d'un certain nombre d'arêtes de coupe ou d'un certain nombre de sièges (10) destinés à des plaquettes de coupe (11),
• un trou traversant central (12) pour monter la fraise-disque (6) sur un arbre (3, 103) d'un porte-outil rotatif (2, 102),
• un moyen (8) configuré pour assurer une fixation empêchant toute rotation de la fraise-disque (6) dans une position angulaire spécifique par rapport à l'arbre pénétrant dans le trou traversant central (12),
• au moins un canal à réfrigérant interne (13) s'étendant radialement à l'intérieur de la fraise-disque (6) depuis une ouverture radialement intérieure (14) située dans une partie centrale intérieure (15) de la fraise-disque jusqu'à au moins une ouverture de sortie (16) dans la partie périphérique extérieure (9), et
• au moins une ouverture d'entrée orientée axialement (21) dans une première surface de butée latérale orientée axialement (19) de la partie centrale intérieure (15) de la fraise-disque destinée à recevoir le réfrigérant et communiquant avec l'ouverture radialement intérieure (14) du canal à réfrigérant interne s'étendant radialement (13),
***caractérisée* en ce que** la au moins une ouverture d'entrée orientée axialement (21) est formée par un trou traversant axial (18) s'étendant à travers la fraise-disque (6) depuis la première surface de butée latérale orientée axialement (19) jusqu'à une seconde surface de butée latérale orientée axialement (20) sur le côté opposé de la partie centrale intérieure (15) de la fraise-disque.

2. Fraise-disque selon la revendication 1, ***caractérisée* en ce qu'**elle présente au moins un canal de distribution de réfrigérant interne (22) s'étendant au moins en partie autour du trou traversant central (12) et reliant la au moins une ouverture d'entrée orientée axialement (21) avec au moins deux canaux à réfrigérant s'étendant radialement (13).

3. Fraise-disque selon la revendication 1 ou 2, ***caractérisée* en ce qu'**elle présente une pluralité de trous traversants axiaux (18) formant les ouvertures d'entrée orientées axialement (21).

4. Fraise-disque selon la revendication 3, ***caractérisée* en ce que** les trous traversants axiaux (18) formant les ouvertures d'entrée orientées axialement (21) sont répartis de manière régulière autour du trou traversant central (12).

5. Fraise-disque selon les revendications 2 et 3, ***caractérisée* en ce que** tous les trous traversants axiaux (18) formant les ouvertures d'entrée orientées axialement (21) s'ouvrent dans ledit au moins un canal de distribution de réfrigérant interne (22).

6. Fraise-disque selon la revendication 2, ***caractérisée* en ce que** le canal de distribution de réfrigérant interne (22) est un canal annulaire entourant le trou traversant central (12) et reliant toutes les ouvertures d'entrée orientées axialement (21) avec les canaux à réfrigérant s'étendant radialement (13) de la fraise-disque.

7. Fraise-disque selon l'une quelconque des revendications précédentes, ***caractérisée* en ce que** la au moins une ouverture de sortie (16) du au moins un canal à réfrigérant interne (13) est située dans une cavité à copeaux (17) formée dans la partie périphérique (19) de la fraise-disque.

8. Kit comprenant
a) au moins une fraise-disque (6) pour la découpe de métal selon l'une quelconque des revendications précédentes et
b) au moins une bague d'espacement (5) ayant un trou traversant central (23) pour monter la bague d'espacement sur le même arbre (3, 103) du porte-outil rotatif (2, 102) que la fraise-disque, la bague d'espacement présentant un moyen (7) configuré pour assurer une fixation empêchant toute rotation de la bague d'espacement dans une position angulaire prédéterminée par rapport à l'arbre (3, 103) du porte-outil, où la bague d'espacement comprend au moins un trou traversant axial (24) situé de sorte à communiquer avec la au moins une ouverture d'entrée orientée axialement (21) dans la fraise-disque (6) lorsque la bague d'espacement (5) est en butée contre la première (19) ou la seconde (20) surface de butée latérale orientée axialement de la fraise-disque dans la position angulaire prédéterminée.

9. Kit selon la revendication 8, ***caractérisé* en ce qu'**il comprend une pluralité de fraises-disques (6), et **en ce que** au moins une fraise-disque (6) présente ledit moyen (8) configuré pour assurer une fixation empêchant toute rotation de la fraise-disque (6) pour obtenir cela dans une position angulaire par rapport à l'arbre (3) différente d'une telle position angulaire d'une autre fraise-disque dans le sens que les arêtes de coupe d'au moins une fraise-disque ou des plaquettes de coupe de celle-ci sont déplacées de manière circonférentielle par rapport aux arêtes de coupe d'une autre fraise-disque ou des plaquettes de coupe de celle-ci lorsqu'elle est fixée sur l'arbre.

10. Kit selon la revendication 8 ou 9, ***caractérisé* en ce que** le nombre de trous traversants axiaux (18) dans au moins une fraise-disque (6) est un multiple du nombre des trous traversants axiaux (24) de la bague d'espacement (5) de sorte que la moitié au plus des trous traversants axiaux de la fraise-disque sont situés de sorte à communiquer avec un trou traversant axial (24) d'une bague d'espacement (5) dans la position angulaire prédéterminée.

11. Kit selon la revendication 10, présentant au moins une fraise-disque selon la revendication 4, ***caractérisé* en ce que** les trous traversants axiaux (24) dans la bague d'espacement (5) sont répartis de manière régulière autour du trou traversant central (23).

12. Kit selon l'une quelconque des revendications 8 à 11, ***caractérisé* en ce qu'**il comprend une pluralité de bagues d'espacement (5) et/ou une pluralité de fraises-disques (6).

13. Kit selon l'une quelconque des revendications 8 à 12, ***caractérisé* en ce qu'**il comprend en outre un moyen de verrouillage (28) destiné à fixer la au moins une fraise-disque (6) et la au moins une bague d'espacement (5) sur l'arbre (3, 103) du porte-outil rotatif (2, 102), le moyen de verrouillage comprenant un couvercle (29, 129) qui peut être monté sur une extrémité de l'arbre par le biais d'un élément de fixation (30) serrant le couvercle sur la bague d'espacement ou sur la première ou la seconde surface de butée latérale orientée axialement de la fraise-disque dans l'état de fixation du moyen de verrouillage, où le couvercle (29, 129) comprend un raccord à réfrigérant (31) pour faire communiquer du réfrigérant entre un canal à réfrigérant central (25, 125, 225) débouchant au niveau de l'extrémité de l'arbre et le ou les trous traversants axiaux (24, 18) dans la bague d'espacement (5) ou la fraise-disque (6) en contact avec le couvercle.

14. Kit selon la revendication 13, ***caractérisé* en ce que** l'élément de fixation (30) est une vis de serrage présentant une queue filetée de manière externe destinée à être vissée dans un taraudage interne du canal à réfrigérant central dans l'extrémité de l'arbre, la queue de la vis de serrage comprenant au moins un canal d'alimentation (33) du moyen de verrouillage pour une communication de réfrigérant entre le canal à réfrigérant central (25, 125, 225, 140, 141, 240, 241) de l'arbre et le raccord à réfrigérant du couvercle.

15. Kit selon les revendications 13 ou 14, ***caractérisé* en ce qu'**il comprend en outre le porte-outil (2, 102) présentant le canal à réfrigérant central (25, 125) configuré pour être raccordé à une source de réfrigérant au niveau d'une extrémité arrière du porte-outil.

16. Kit selon la revendication 15, ***caractérisé* en ce que** le porte-outil (102) présente un collier (132) ayant une surface de montage orientée axialement destinée à être en butée avec la bague d'espacement (5) ou avec la surface de butée latérale orientée axialement de la fraise-disque montée sur l'arbre, où le porte-outil est doté d'au moins un autre canal à réfrigérant (140, 141) relié au canal à réfrigérant central et se terminant dans une ouverture d'alimentation (142, 143) dans la surface de montage du collier (132), laquelle ouverture d'alimentation est positionnée pour fournir du réfrigérant à la au moins une ouverture d'entrée orientée axialement (21) dans la surface de butée latérale orientée axialement (19, 20) de la fraise-disque (6) ou au trou traversant axial (24) de la bague d'espacement (5).
